# EUROPEAN PATENT SPECIFICATION

(11) **EP 2 156 993 B1**
(45) Date of publication and mention of the grant of the patent: **10.05.2017**
(21) Application number: 08751727.2
(22) Date of filing: 14.05.2008
(51) Int. Cl.: B60R 21/213

(54) **CURTAIN AIR BAG DEVICE AND METHOD FOR MANUFACTURING THE SAME**
VORHANGAIRBAG UND VERFAHREN ZU SEINER HERSTELLUNG
DISPOSITIF DE COUSSIN DE SÉCURITÉ GONFLABLE EN RIDEAU ET PROCÉDÉ DE FABRICATION ASSOCIÉ

(30) Priority: 14.05.2007 JP 2007127526
(43) Date of publication of application: 24.02.2010
(73) Proprietor: Autoliv Development AB, 447 83 Vårgårda (SE)
(72) Inventor: HIGANO, Makoto, Yokohama-shi Kanagawa 222-0033 (JP); SAEGUSA, Takayoshi, Yokohama-shi Kanagawa 222-0033 (JP)
(74) Representative: Schön, Thilo
(86) International application number: PCT/JP2008/001209
(87) International publication number: WO 2008/139737

(56) References cited:
- EP-A2- 1 564 083
- DE-A1- 10 148 216
- DE-U1- 20 014 568
- JP-A- 2000 025 551
- JP-A- 2000 033 846
- JP-A- 2004 210 099
- JP-A- 2005 104 234
- US-A1- 2006 061 074

## Description

### Technical Field

The present invention relates to a curtain airbag device for protecting passengers by inflating an airbag (bag body) inside of windows in a curtain state when a vehicle emergency (a roll-over, a lateral collision, an overturn, and the like) occurs. More particularly, the invention relates to a structure of portions of a curtain airbag attached to a vehicle.

### Background Art

In general, an inner panel (body panel) covered by a headlining (roof) is disposed above side windows of a passenger compartment. A bag body of a curtain airbag is accommodated in a folded state in a space formed by the headlining and the inner panel (Patent Documents 1 and 2). When the curtain airbag device is operated, the bag body is expanded by a gas supplied from an inflator and inflated into a compartment by pushing down and expanding the lower edge of the headlining.

Patent Document 1: Japanese Patent Application Laid-Open No. 2001-219807
Patent Document 2: Japanese Patent Application Laid-Open No. 2002-187518

Conventionally, when a curtain airbag is attached to a vehicle, a cushion (airbag body) is clamped by metal parts (brackets), and the brackets are coupled with and fixed to the cushion by partly deforming the brackets. The curtain airbag has such a structure that bolt holes are formed to the brackets, and bolts are inserted through the brackets and the cushion passing through the bolt holes and fixed to the vehicle. However, in the structure described above, since the cushion exists between the brackets, there is a possibility that an initial torque at the time when the brackets are fixed by the bolts is lowered as a time passes. Further, when the brackets are coupled with the cushion, since the brackets are attached to the cushion by being deformed, dedicated equipment is required in a manufacturing process of the airbag.

US 2006/0061074 A1 shows a curtain airbag device that is coupled to a vehicle. There are two kinds of attachments: First, the upper edge area of the bag body is mounted to the vehicle near the roof rail of the vehicle via brackets. Second, the front edge area and the rear edge area are coupled to the A- and C-pillar respectively. For the coupling to the A-pillar a strap and a bracket are used. The bracket comprises an oval hole through which the strap extends. The same applies for the coupling to the C-pillar.

JP 2004 210099 A shows a curtain airbag which is coupled to the vehicle via a bar extending parallel to the roof rail. This bar extends through loop-shaped straps coupled to the upper edge area of the bag body.

### Disclosure of the Invention

### Problems to be Solved by the Invention

A first object of the present invention, which was made in view of the above circumstances, is to provide an airbag device, which can maintain an airbag attaching stability (a tightening torque) for a long period and a method of manufacturing the airbag device.

Further, a second object is to provide an airbag device which can easily couple an airbag body (cushion) with brackets without requiring special equipment when they are coupled with each other and a method of manufacturing the airbag device.

### Means for Solving the Problems

These requirements are fulfilled by a curtain airbag device with the features of claim 1 and by a method of manufacturing the airbag device with the features of claim 6.

The curtain airbag device according to the invention comprises strip-shaped coupling members coupled to the upper edge portion of the bag body and a plurality of brackets. Each bracket has a fixing hole and a laterally long slit-shaped coupling hole through which one of the strip-shaped coupling members extends. The width of the coupling hole exceeds the width of the strip-shaped coupling member.

A method of manufacturing a curtain airbag device according to the invention has a step of coupling the airbag body with the brackets by inserting the one end of the strip-shaped coupling members through the coupling holes of the brackets and then coupling both the ends with the bag body, and a step of folding and compressing the airbag body including the brackets.

### Effects of the Invention

According to the curtain airbag device of the present invention with the above structure, since the brackets are directly tightened and fixed to the vehicle without interposing the bag body (cushion) therebetween, a tightening torque can be suppressed from being reduced as a time passes.

Since the bag body is coupled with the brackets by inserting the strip-shaped coupling members through the coupling holes formed to the brackets and sewing, for example, both the ends of strip-shaped coupling members to the bag body, a coupling job can be easily performed without using special equipment.

Further, in the invention, since the brackets are caused to come into contact with the strip-shaped coupling members over the entire surfaces of the strip-shaped coupling members, there is a merit in that the coupling strength of the brackets with the bag body and further the coupling strength of the vehicle with the bag body can be improved. More specifically, when the bag body is inflated at the time the airbag device is operated and a force for pulling the brackets downward acts on the brackets, the force can be supported by the entire width of the strip-shaped coupling members. In contrast, in a conventional art, even if a strip-shaped coupling member is clamped between two brackets, a large force acts in a very small range as in a case that the force is substantially supported in portions where bolts are in contact with coupling members (tabs). Accordingly, there is a case that the portion, where the bracket is coupled with the tab, must be reinforced to obtain the strength of the portion.

The brackets (namely the coupling holes) and the strip-shaped coupling members are designed so that the strip-shaped coupling members move with respect to the brackets. Because the strip-shaped coupling members freely (smoothly) move with respect to the brackets, the brackets can be kept in a free attitude without being restricted by the long and relatively heavy bag body. As a result, an attachment job to the vehicle can be easily performed using a tightening tool such as bolts and the like.

### Brief Description of the Drawings

Fig. 1 is a sectional view of a passenger compartment having a curtain airbag device according to an example of the present invention.
Fig. 2A and Fig. 2B are explanatory views showing a structure of a main portion of the curtain airbag device according to a first example of the invention, wherein Fig. 2A shows a state that a bracket is coupled with a bag body, and Fig.2B shows a state of a tab before the bracket is attached.
Fig. 3A and Fig.3B are explanatory views showing a structure of a main portion of a curtain airbag device according to a second example of the invention, wherein Fig.3A shows a state that a bracket is coupled with a bag body, and Fig.3B shows a state before the bracket is attached. Figs.3 are longitudinal sectional views showing the structure of the airbag body used for instruction.

### Best Mode for Carrying Out the Invention

An example of the present invention will be explained below with reference to the drawings.

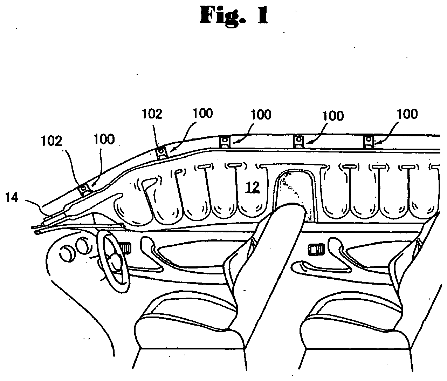

Fig. 1 is a sectional view of a passenger compartment having a curtain airbag device according to the example of the present invention. As shown in Fig. 1, for example, in a passenger car type vehicle, an inner panel covered by a headlining is disposed above side windows of the passenger compartment. The curtain airbag device is fixed to the inner panel by bolts using brackets 100. In Fig. 1, reference numeral 102 denotes fixing holes (bolt holes) for the bolts formed to the brackets 100.

The curtain airbag device has a bag body 12 and a gas supply unit (inflator) 14. The bag body 12 is accommodated in a state that it is covered by the headlining disposed to a window upper edge of the vehicle and protects passengers in the vehicle by being expanded and inflated downward from a gap between the headlining and the inner panel when it is operated, and the inflator 14 supplies an expansion gas to the bag body 12.

The bag body 12 is formed in a bag-shaped body by sewing, bonding, or welding two overlapping sheets or has a bag portion formed by weaving a single sheet. The bag body 12 has a plurality of chambers which expand when the bag body 12 is operated and a duct portion which extends in a longitudinal direction on the upper side of the chambers and distributes the gas to the respective chambers. A method of folding the bag body 12 is not particularly limited and various methods such as a so-called "accordion folding" method, a "rolling" method, and the like can be employed.

When an emergency such as a roll-over, a lateral collision, an overturn, and the like occurs while a vehicle is moving, a sensor disposed to the vehicle detects abnormal vibrations and sends an ignition signal to the not shown inflator (gas generation unit) 14 based on the signal. The inflator 14 has a propellant which is disposed therein and drives the inflator 14 in response to the ignition signal from the sensor. The expansion gas is filled in the bag body 12 by operating the inflator 14, and the bag body 12 is inflated so that the headlining is pressed down and expanded (forcibly torn and blown off). The side windows are covered by the inflated bag body 12 so that the passengers in the vehicle are protected.

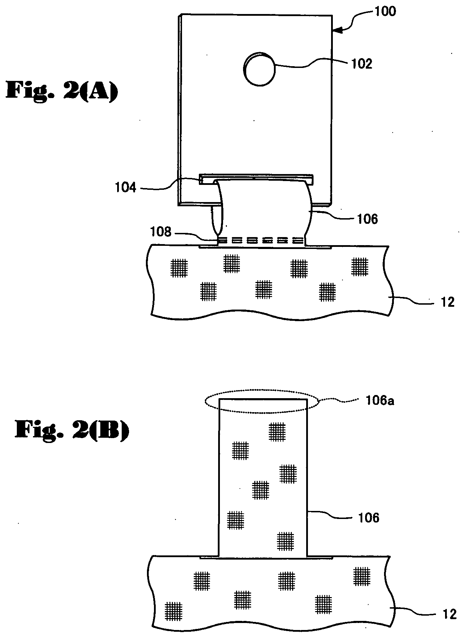

Fig. 2A and Fig.2B are explanatory views showing a structure of a main portion of a curtain airbag device according to a first example of the invention, wherein the Fig.2A shows a state that a bracket 100 is coupled with a bag body 12, and the Fig.2B shows a state of a tab 106 before the bracket 100 is attached thereto. The curtain airbag device according to the example has the bag body 12, a plurality of the tabs 106, and a plurality of the brackets 100. The bag body 12 is accommodated to a window upper edge of a vehicle in a compressed state and expanded and inflated toward inside of the vehicle when it is operated, the plurality of tabs 106 are coupled with the bag body 12, and the plurality of brackets 100 fix the bag body 12 to the vehicle.

The plurality of brackets 100 have slit-shaped coupling holes 104, through which the tabs 106 are inserted, circular fixing holes 102 through which bolts are inserted. The bag body 12 is coupled with the brackets 100 by the tabs 106. The bag body 12 is fixed to the vehicle by the bolts (not shown) through the brackets 100.

As shown in Fig.2B, the strip-shaped tab 106 is formed of the same material as that of the bag body 12 integrally therewith. An end portion 106a of the tab 106 is annularly formed passing through the coupling hole 104 of the bracket 100 and is sewed to a portion which is coupled with the bag body 12 or to the other end of the tab 106 itself.

The bracket 100 is molded of a metal sheet having a strength sufficient to support the bag body 12 that is expanded and inflated. The fixing hole 102 has an inside diameter which is necessary for the bolt to pass therethrough. The coupling hole 104, through which the tab 106 passes, is formed in a laterally long slit-shape and has a width and a height to allow the tab 106 to easily move therein.

When the curtain airbag device arranged as described above is manufactured (assembled), after the end portions 106a of the tabs 106 are inserted through the coupling holes 104 of the brackets 100, the end portions 106a are sewed to the bag body 12 or to the end portions (roots) of the tabs 106. As a result, the airbag body 12 is coupled with the brackets 100. In this state, the airbag body 12 having the brackets 100 is folded and compressed.

When the curtain airbag device according to the first example is assembled to the vehicle, the airbag device, which is folded to a thick rope-shape, is carried to the vicinity of the window upper edge, the bolts (not shown) are inserted into the fixing holes 102 of the brackets 100, and the airbag device is fixed to the vehicle by tightening the bolts.

In the first example, since the brackets 100 are directly tightened and fixed to the vehicle without interposing the bag body (cushion) 12 therebetween, a tightening torque can be suppressed from being reduced as a time passes.

Since the bag body 12 is coupled with the brackets 100 by inserting the tabs 106 through the coupling holes 104 formed to the brackets 100 and sewing the end portions of the tabs 106, a coupling job can be easily performed without using special equipment.

Further, since the coupling holes 104 of the bracket 100 and the tabs 106 are designed so that the tabs 106 freely move to the brackets 100, the brackets 100 can be kept in a free attitude without being restricted by the long and relatively heavy bag body 12. As a result, an attachment job to the vehicle can be easily performed using a tightening tool of a bolt and the like.

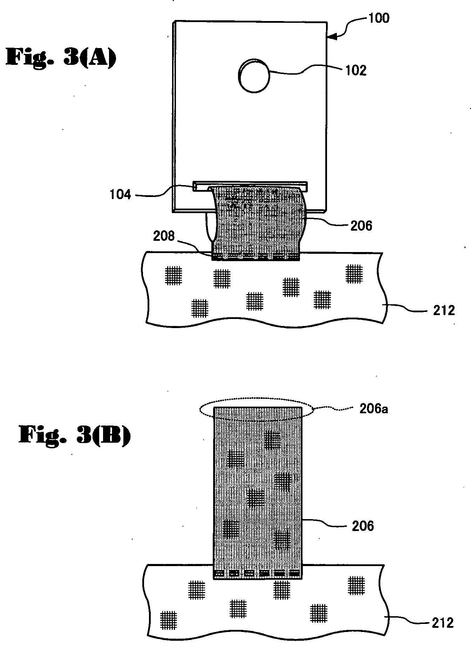

Fig. 3A and Fig.3B are explanatory views showing a structure of a main portion of a curtain airbag device according to a second example of the present invention, wherein Fig.3A shows a state that a bracket 100 is coupled with a bag body 212, and Fig.3B shows a state before the bracket 100 is attached thereto. The curtain airbag device according to the second example is different from the airbag device according to the first example described above in that strip-shaped coupling members 206 are composed of members different from the bag body 212. Since the other main arrangements of the second example are similar to those of the first example, an overlapping explanation is omitted.

As shown in Fig. 3B, each strip-shaped coupling member 206 is composed of the member different from the bag body 212 and has an end portion 206a inserted through a coupling hole 104 of each bracket 100. With this arrangement, the strip-shaped coupling member 206 is formed in annular shape and sewed to a portion with which the bag body 212 is coupled or to the other end of the strip-shaped coupling member 206 itself. A structure of the bracket 100 is similar to that of the first example described above.

When the curtain airbag device is manufactured (assembled), one end of the strip-shaped coupling members 206 are previously sewed to the upper edge portion of the bag body 212. Next, after the end portions 206a of the strip-shaped coupling members 206 are inserted through the coupling holes 104 of the brackets 100, the end portions 206a are sewed to the bag body 212 or to the end portions (roots) of the strip-shaped coupling members 206. With this operation, the airbag body 212 is coupled with the brackets 100. In this state, the airbag body 12 having the brackets 100 is folded and compressed. Note that it is also possible to sew and fix both the ends of the strip-shaped coupling members 206 to the bag body 212 at the same time after the strip-shaped coupling members 206 are inserted through the coupling holes 104 of the brackets 100.

A method of assembling the curtain airbag device according to the second example to a vehicle is also similar to that of the first example described above.

Since the strip-shaped coupling member 206 is composed of the different members in the second example, there is an advantage in that a degree of freedom of a coupling job for coupling the brackets 100 to the bag body 212 is increased in addition to the advantage of the first example described above. More specifically, for example, it is possible to perform a sewing job at the same time to a plurality of units, each of which has the strip-shaped coupling member 206 caused to previously pass through the coupling hole 104 of the bracket 100 and which are disposed along the edge portion of the bag body 212.

The curtain airbag device according to the invention can be applied not only to a passenger car type vehicle but also to various types of vehicles such as one-box type vehicle and the like. Further, although the material of the brackets 10 is the metal in the examples, other material (resin and the like) having a sufficient mechanical strength may be used.

### Description of Reference Numerals

- 12:: bag body
- 14:: inflator
- 100:: bracket
- 102:: fixing hole
- 104:: coupling hole
- 106:: tab
- 108:: sewed portion
- 206:: strip-shaped portion coupling member
- 208:: sewed portion
- 212:: bag body

## Claims

1. A curtain airbag device, comprising:
a bag body (12) accommodated to a window upper edge of a vehicle in a compressed state for expanding and inflating toward inside of the vehicle when it is operated;
a plurality of brackets (100) coupled to an upper edge portion of the bag body (12) for fixing the bag body to the vehicle,
wherein, each of the plurality of brackets (100) has a fixing hole (102) into which each of predetermined tightening members is inserted,
wherein
the bag body (12) is coupled with the brackets (100) by strip-shaped coupling members (106, 206) coupled to an upper edge portion of the bag body (12), and
each of the plurality of brackets (100) has a laterally long slit-shaped coupling hole (104) through which each of the strip-shaped coupling members (106, 206) is inserted such that an end portion (106a) of the strip-shaped coupling member (106, 206) is annularly formed passing through the coupling hole (104) of the bracket (100), the coupling hole (104) having a width and a height to allow the strip-shaped coupling member (106, 206) to easily move therein, with the width of the coupling hole (104) exceeding the width of the strip-shaped coupling member (106, 206),
such that when the bag body (12) is inflated at the time of the airbag device is operated and a force for pulling the brackets (100) downward acts on the brackets (100), the force can be supported by the entire width of the strip-shaped coupling members (106, 206).

2. The curtain airbag device according to claim 1, **characterized in that** the strip-shaped coupling members (106, 206) have such a structure that ends are fixed to the bag body (12).

3. The curtain airbag device according to claim 2, **characterized in that** the ends of the strip-shaped coupling members (106, 206) are coupled with the bag body (12) by sewing.

4. The curtain airbag device according to claim 1, 2, or 3, **characterized in that** the strip-shaped coupling members (106, 206) are tabs (106) formed of the same material as that of the bag body integrally therewith.

5. The curtain airbag device according to claims 1, 2, or 3, **characterized in that** the strip-shaped coupling members (206) are arranged as members different from the bag body.

6. A method of manufacturing the airbag device according to claim 1, **characterized by** comprising:
a step of coupling the airbag body (12) with the brackets (100) by inserting the one end of the strip-shaped coupling members (106, 206) through the coupling holes (104) of the brackets (100) and then coupling both the ends with the bag body (12); and
a step of folding and compressing the airbag body (12) including the brackets (100).

7. The method of manufacturing the curtain airbag device according to claim 6, **characterized in that** the ends of the strip-shaped coupling members (106, 206) are coupled with the bag body (12) by sewing.

8. The method of manufacturing the curtain airbag device according to claim 6 or 7, **characterized in that** the strip-shaped coupling members (106, 206) are tabs (106) formed of the same material as that of the bag body (12) integrally therewith.

9. The method of manufacturing the curtain airbag device according to claims 6 or 7, **characterized in that** the strip-shaped coupling members are arranged as members different from the bag body.

## Patentansprüche

1. Vorhangairbag, umfassend:
einen Beutelkörper (12), welcher in einem komprimierten Zustand an einer oberen Fensterkante eines Fahrzeugs angebracht ist, zum Expandieren und Aufblasen in das Innere des Fahrzeugs bei einem Auslösen;
eine Mehrzahl von Schellen (100), die mit einem oberen Kantenabschnitt des Beutelkörpers (12) verbunden sind, zum Befestigen des Beutelkörpers an dem Fahrzeug,
wobei jede der Mehrzahl von Schellen (100) ein Befestigungsloch (102) aufweist, in welches jedes von vorbestimmten Spannelementen eingeführt wird,
wobei
der Beutelkörper (12) mit den Schellen (100) durch streifenförmige Verbindungselemente (106, 206) verbunden ist, die mit einem oberen Kantenabschnitt des Beutelkörpers (12) verbunden sind, und
jede der Mehrzahl von Schellen (100) ein seitlich langes, schlitzförmiges Verbindungsloch (104) aufweist, durch welches jedes der streifenförmigen Verbindungselemente (106, 206) eingeführt wird, derart, dass ein Endabschnitt (106a) des streifenförmigen Verbindungselements (106, 206) ringförmig ausgebildet ist, wobei dieser durch das Verbindungsloch (104) der Schelle (100) läuft, wobei das Verbindungsloch (104) eine Breite und eine Höhe aufweist, damit sich das streifenförmige Verbindungselement (106, 206) darin leicht bewegen kann, wobei die Breite des Verbindungslochs (104) die Breite des kreisförmigen Verbindungselements (106, 206) überschreitet,
derart, dass dann, wenn der Beutelkörper (12) zu der Zeit aufgeblasen wird, wenn der Airbag ausgelöst wird und eine Kraft zum Herunterziehen der Schellen (100) auf die Schellen (100) einwirkt, die Kraft durch die gesamte Breite der streifenförmigen Verbindungselemente (106, 206) gehalten werden kann.

2. Vorhangairbag nach Anspruch 1, **dadurch gekennzeichnet, dass** die streifenförmigen Verbindungselemente (106, 206) einen derartigen Aufbau aufweisen, dass Enden an dem Beutelkörper (12) befestigt sind.

3. Vorhangairbag nach Anspruch 2, **dadurch gekennzeichnet, dass** die Enden der streifenförmigen Verbindungselemente (106, 206) mit dem Beutelkörper (12) durch Nähen verbunden sind.

4. Vorhangairbag nach Anspruch 1, 2 oder 3, **dadurch gekennzeichnet, dass** die streifenförmigen Verbindungselemente (106, 206) Schlaufen (106) sind, die aus dem gleichen Material wie jenes des Beutelkörpers integral damit gebildet sind.

5. Vorhangairbag nach Anspruch 1, 2 oder 3, **dadurch gekennzeichnet, dass** die streifenförmigen Verbindungselemente (206) als Elemente ausgelegt sind, welche sich von dem Beutelkörper unterscheiden.

6. Verfahren zum Herstellen des Airbags nach Anspruch 1, **dadurch gekennzeichnet, dass** es umfasst:
einen Schritt eines Verbindens des Airbagkörpers (12) mit den Schellen (100) durch Einführen des einen Endes der streifenförmigen Verbindungselemente (106, 206) durch die Verbindungslöcher (104) der Schellen (100) und dann eines Verbindens beider Enden mit dem Beutelkörper (12); und
einen Schritt eines Faltens und Komprimierens des Airbagskörpers (12) einschließlich der Schellen (100).

7. Verfahren zum Herstellen des Vorhangairbags nach Anspruch 6, **dadurch gekennzeichnet, dass** die Enden der streifenförmigen Verbindungselemente (106, 206) mit dem Beutelkörper (12) durch Nähen verbunden werden.

8. Verfahren zum Herstellen des Vorhangairbags nach Anspruch 6 oder 7, **dadurch gekennzeichnet, dass** die streifenförmigen Verbindungselemente (106, 206) Schlaufen sind, die aus dem gleichen Material wie jenem des Beutelkörpers (12) integral damit gebildet werden.

9. Verfahren zum Herstellen des Vorhangairbags nach Anspruch 6 oder 7, **dadurch gekennzeichnet, dass** die streifenförmigen Verbindungselemente als Elemente unterschiedlich von dem Beutelkörper ausgelegt werden.

## Revendications

1. Dispositif de coussin de sécurité gonflable en rideau, comprenant :
un corps de coussin (12) adapté au bord supérieur d'une fenêtre de véhicule, dans un état comprimé et destiné à s'étendre et à se gonfler vers l'intérieur du véhicule lorsqu'il est activé,
une pluralité de fixations (100) couplées au corps de coussin (12) le long de son bord supérieur, destinées à fixer le corps de coussin au véhicule ;
chacune des fixations (100) de ladite pluralité présentant un trou de fixation (102) dans lequel est inséré un élément de serrage respectif parmi une pluralité d'éléments de serrage prédéterminés,
le corps de coussin (12) étant couplé aux fixations (100) par des éléments de couplage en forme de bande (106, 206) couplés au corps de coussin (12) le long de son bord supérieur, et
chacune des fixations (100) de ladite pluralité présentant un trou de couplage (104) en forme de longue fente latérale au travers duquel est inséré chaque élément de couplage en forme de bande (106, 206) de manière qu'une partie terminale (106a) de l'élément de couplage en forme de bande (106, 206) forme un anneau qui passe dans le trou de couplage (104) de la fixation (100), le trou de couplage (104) présentant une largeur et une hauteur qui permettent à l'élément de couplage en forme de bande (106, 206) de facilement s'y mouvoir, la largeur du trou de couplage (104) étant supérieure à la largeur de l'élément de couplage en forme de bande (106, 206),
de telle façon que, lorsque le corps de coussin (12) est gonflé lors de l'actionnement du dispositif de coussin de sécurité gonflable et qu'une force s'exerce sur les fixations (100) pour les tirer vers le bas, ladite force peut être supportée par la largeur totale des éléments de couplage en forme de bande (106, 206).

2. Dispositif de coussin de sécurité gonflable en rideau selon la revendication 1, **caractérisé en ce que** les éléments de couplage en forme de bande (106, 206) présentent une structure dont les extrémités sont fixées au corps de coussin (12).

3. Dispositif de coussin de sécurité gonflable en rideau selon la revendication 2, **caractérisé par en ce que** les extrémités des éléments de couplage en forme de bande (106, 206) sont couplées au corps de coussin (12) par couture.

4. Dispositif de coussin de sécurité gonflable en rideau selon la revendication 1, 2 ou 3, **caractérisé en ce que** les éléments de couplage en forme de bande (106, 206) sont des languettes (106) qui sont composées du même matériau que celui qui constitue le corps de coussin et sont formées d'un seul tenant avec ce dernier.

5. Dispositif de coussin de sécurité gonflable en rideau selon la revendication 1, 2 ou 3, **caractérisé en ce que** les éléments de couplage en forme de bande (206) sont conçus comme des éléments distincts du corps de coussin.

6. Procédé de fabrication du dispositif de coussin de sécurité gonflable selon la revendication 1, **caractérisé en ce qu**'il comprend :
une étape de couplage du corps de coussin (12) et des fixations (100) par l'insertion d'une extrémité des éléments de couplage en forme de bande (106, 206) dans les trous de couplage (104) des fixations (100) puis le couplage des deux extrémités au corps de coussin (12) ; et
une étape de pliage et de compression du corps de coussin (12) y compris les fixations (100).

7. Procédé de fabrication du dispositif de coussin de sécurité gonflable en rideau selon la revendication 6, **caractérisé en ce que** les extrémités des éléments de couplage en forme de bande (106, 206) sont couplées au corps de coussin (12) par couture.

8. Procédé de fabrication du dispositif de coussin de sécurité gonflable en rideau selon la revendication 6 ou 7, **caractérisé en ce que** les éléments de couplage en forme de bande (106, 206) sont des languettes (106) qui sont composées du même matériau que celui qui constitue le corps de coussin (12) et sont formées d'un seul tenant avec ce dernier.

9. Procédé de fabrication du dispositif de coussin de sécurité gonflable en rideau selon la revendication 6 ou 7, **caractérisé en ce que** les éléments de couplage en forme de bande sont conçus comme des éléments distincts du corps de coussin.
